# DEMANDE DE BREVET EUROPEEN

(11) **EP 4 667 418 A1**
(43) Date de publication de la demande: **24.12.2025**
(21) Numéro de dépôt: 25183548.4
(22) Date de dépôt: 18.06.2025
(51) Int. Cl.: C01G 49/00, H01M 4/136, H01M 4/1397, H01M 4/58

(54) **MATÉRIAU D ÉLECTRODE SULFATÉ ET FERREUX DE STRUCTURE ORTHORHOMBIQUE**

(30) Priorité: 19.06.2024 FR 2406581
(71) Demandeur: Commissariat à l'Energie Atomique et aux Energies Alternatives, 75015 Paris (FR); Centre National de la Recherche Scientifique, 75016 Paris (FR); Université de Picardie Jules Verne, 80025 Amiens Cedex 1 (FR)
(72) Inventeur: GREBENSHCHIKOVA, Anastasia, 33608 PESSAC (FR); CROGUENNEC, Laurence, 33608 PESSAC (FR); MASQUELIER, Christian, 80000 AMIENS (FR); SIMONIN, Loïc, 38054 GRENOBLE Cedex 09 (FR); OLCHOWKA, Jacob, 33608 PESSAC (FR)
(74) Mandataire: Ipsilon

(57) **Abrégé**

Matériau d'électrode de formule A₂Fe₃(SO₄)₄ dans laquelle A est un alcalin choisi parmi le sodium (Na), le lithium (Li), le potassium (K) et leurs mélanges, le matériau d'électrode présentant une structure cristallographique.

## Description

### Domaine technique

La présente invention concerne un matériau destiné à former une électrode positive d'une batterie, notamment d'une batterie sodium-ion. Elle concerne aussi un procédé de fabrication d'un tel matériau.

### Technique antérieure

Les matériaux sulfatés contenant du fer sont d'intérêts pour l'industrie des batteries, notamment pour former une électrode positive d'une batterie sodium-ion.

Quatre matériaux sulfatés contenant du Fe sont connus des inventeurs. Ils présentent des propriétés électrochimiques potentiellement d'intérêt pour former un composant d'une batterie. Barpanda P. et al. A 3.8-V earth-abundant sodium battery electrode ∥ Nat Commun. Nature Publishing Group, 2014. Vol. 5, P. 4358 décrit un matériau de formule Na₂Fe₂(SO₄)₃ dont la structure est décrite dans le groupe d'espace *C2*/*c,* avec Fe dans un degré d'oxydation +2, et présentant une capacité théorique de 120 mAh/g. Il est également connu de *Pan W. et al. Na₂Fe(SO₄)₂: An anhydrous 3.6 V, low-cost and good-safety cathode for a rechargeable sodium-ion battery* // *J Mater Chem A Mater. Royal Society of Chemistry, 2019. Vol. 7,* 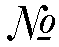 *21. P. 13197-13204* un matériau Na₂Fe(SO₄)₂ dont la structure est décrite dans le groupe d'espace *C2*/*c,* avec Fe dans un degré d'oxydation +2, et présentant une capacité théorique de 91 mAh/g. Il est encore connu de Park H. et al. Monoclinic Fe2(SO4)3: A new Fe-based cathode material with superior electrochemical performances for Na-ion batteries ∥ J Power Sources. Elsevier B. V., 2019. Vol. 434, P. 226750 un matériau de formule Fe₂(SO₄)₃ dont la structure est décrite dans le groupe d'espace *P2₁*/*a*, avec Fe dans un degré d'oxydation +3, et présentant une capacité théorique de 133 mAh/g. Il est enfin connu de *Balić-Žunic T. et al. Eldfellite, NaFe(SO₄)₂* , *a new fumarolic mineral from Eldfell volcano, Iceland ∥ Mineral Mag. Mineralogical Society, 2009. Vol. 73,* 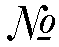 *1. P. 51-57* un matériau de formule NaFe(SO₄)₂, dont la structure est décrite dans le groupe d'espace *C2*/*m,* avec Fe dans un degré d'oxydation +3. Le matériau présente une capacité théorique de 99 mAh/g et ses propriétés électrochimiques ont été rapportées par *Singh P. et al. Eldfellite, NaFe(SO4)₂: an intercalation cathode host for low-cost Na-ion batteries ∥ Energy Environ Sci. Royal Society of Chemistry, 2015. Vol. 8,* 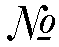 *10. P. 3000-3005.*

Une batterie qui inclurait un matériau contenant du Fe dans un degré d'oxydation +3, serait dans un état chargé, ce qui nécessiterait une électrode négative présodiée en pratique. De façon générale, ces matériaux sulfatés contenant du fer nécessitent une synthèse solide qui doit être réalisée sous une atmosphère inerte. En effet, les phases pures que ces matériaux contiennent sont sensibles à l'humidité et peuvent capter des molécules d'eau, et celles contenant des ions Fe²⁺ tendent à s'oxyder facilement en présence d'oxygène. En outre, un broyage est effectué dans les cas décrits pour homogénéiser un mélange de précurseurs avant qu'une étape ultérieure de recuit ne soit effectuée.

Il est par ailleurs connu de *Gao J. et al. Preparation, structure and properties of Na₂Mn₃(SO₄)₄: A new potential candidate with high voltage for Na-ion batteries* // *J Mater Chem A Mater. Royal Society of Chemistry, 2016. Vol. 4,* 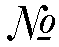 *30. P. 11870-11877* et *Ben Yahia H. Crystal structure of a new polymorphic modification of Na₂Mn₃(SO₄)₄ ∥ Zeitschrift für Kristallographie - Crystalline Materials, 2019. Vol. 234,* 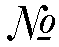 *11-12, P. 697-705* deux matériaux polymorphes contenant du Mn de formule Na₂Mn₃(SO₄)₄. Ces matériaux cristallisent dans des structures orthorhombiques décrites dans les groupes d'espace *Cmc2₁* et *Pbca.* La structure *Cmc2₁* est obtenue à partir de précurseurs amorphes de Na₂SO₄ et MnSO₄·H₂O dans un ratio molaire de 1:3, ils sont mélangés et recuits à 300 °C pendant 6 h, puis à nouveau recuits pendant un jour avec plusieurs étapes de broyage intermédiaires. Pour obtenir le matériau de structure *Pbca,* les mêmes précurseurs sont mélangés dans les proportions massiques de 0.298 g et 1.046 g (et dans les proportions molaires avec un excès de 2 mol.% de Na₂SO₄) et recuits à 600°C pendant 12 h. Cependant, aucune activité électrochimique n'a été reportée pour ces matériaux.

Une étude théorique menée par *Phung B. Na₂Fe₃(SO₄)₄ As a New High-Voltage Potential Cathode Material for Sodium-Ion Batteries ∥ Hue University Journal of Science: Natural Science, 2021. Vol. 130,* 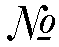 *1B. P. 59-67* prédit que le composé Na₂Fe₃(SO₄)₄ présenterait, s'il existait, un potentiel de 4.0 V vs. Na⁺/Na à l'électrode positive de batteries Na-ion et une structure décrite dans le groupe d'espace *Cmc2₁.*

Il existe donc le besoin pour un nouveau matériau cristallin sulfaté, comportant un métal alcalin et du fer, pour la production d'une électrode d'une batterie, ainsi que pour un procédé de fabrication de ce matériau qui puisse être mis en œuvre industriellement de façon simple.

### Exposé de l'invention

L'invention concerne un matériau d'électrode de formule A₂Fe₃(SO₄)₄ dans laquelle A est un alcalin choisi parmi le sodium (Na), le lithium (Li), le potassium (K) et leurs mélanges, le matériau d'électrode présentant une structure cristallographique orthorhombique.

Avantageusement, le matériau d'électrode selon l'invention présente une tension de décharge moyenne et une capacité théorique intéressantes pour former une électrode positive de batterie A-ion, notamment sodium-ion.

De préférence, la structure orthorhombique du matériau d'électrode est dans le groupe d'espace *Pbca.*

Un exemple de structure cristallographique dans le groupe d'espace *Pbca* est décrit dans *Ben Yahia H., Crystal structure of a new polymorphic modification of Na₂Mn₃(SO₄)₄ ∥ Zeitschrift für Kristallographie - Crystalline Materials, 2019. Vol. 234,* 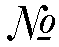 *11-12, P. 697-705.*

### L'invention concerne aussi un procédé de fabrication comprenant :

a) la fourniture d'un précurseur alcalin comportant l'alcalin A et d'un précurseur ferreux comportant Fe, au moins l'un des précurseurs alcalin et ferreux comportant des groupes sulfates SO₄,
b) la répétition d'un cycle de synthèse jusqu'à formation du matériau d'électrode selon l'invention, le cycle de synthèse étant mis en œuvre en atmosphère inerte et comportant, voire consistant en, un broyage des précurseurs alcalin et ferreux dans une cuve de broyage et un repos successif, voire consécutif, à l'arrêt du broyage.

Les inventeurs ont remarqué que la répétition du cycle de synthèse à partir du précurseur alcalin et du précurseur ferreux permet d'obtenir simplement le matériau d'électrode.

Au cours du repos, la cuve de broyage est maintenue immobile. En particulier, elle n'est pas en rotation.

Par ailleurs, l'invention concerne une électrode positive de batterie, notamment choisie parmi une électrode positive de batterie lithium-ion (Li-ion), une électrode positive de batterie sodium-ion (Na-ion), une électrode positive de batterie potassium-ion (K-ion), une électrode positive de batterie lithium (Li), une électrode positive de batterie sodium (Na) et une électrode positive de batterie potassium (K), ladite électrode positive de batterie comportant le matériau d'électrode selon l'invention ou obtenu selon le procédé de l'invention.

Enfin, l'invention concerne une batterie, de préférence choisie parmi une batterie lithium-ion (Li-ion), une batterie sodium-ion (Na-ion), une batterie potassium-ion (K-ion), une batterie au sodium métal (Na), une batterie au lithium métal (Li), une batterie au potassium métal (K) la batterie comportant une électrode positive de batterie selon l'invention.

De préférence, l'alcalin A est le sodium.

Le précurseur alcalin peut être de formule A₂SO₄.

Selon la variante où A est Na, le précurseur alcalin est de préférence Na₂SO₄.

Selon la variante où A est un mélange d'au moins deux alcalins parmi Na, Li et K, le précurseur alcalin peut être un mélange d'au moins deux composés parmi Na₂SO₄, Li₂SO₄ et K₂SO₄ respectivement.

Le précurseur ferreux peut être de formule FeSO₄·xH₂O, avec 0 ≤ x < 0,5.

Le précurseur ferreux peut être déshydraté. De préférence, il est déshydraté préalablement à la mise en œuvre de l'étape a). La déshydratation du précurseur hydraté est réalisée sous atmosphère inerte. Elle peut être réalisée à une température comprise entre 150 °C et 400 °C, notamment à 250 °C pendant une durée supérieure à 2 h, notamment égale à 3 h. A l'étape a), un mélange d'un précurseur alcalin et d'un précurseur ferreux peut être formé, en particulier à partir d'une poudre comportant, voire consistant en, des particules faites du précurseur alcalin et d'une poudre comportant, voire consistant en, des particules faites du précurseur ferreux.

De préférence, à l'étape a), les précurseurs alcalin et ferreux sont fournis dans un rapport molaire Fe/A compris entre 1,2 et 1,5, de préférence égal à 1,25, le rapport molaire Fe/A étant égal au rapport entre le nombre de moles de Fe du précurseur ferreux sur le nombre de moles de A du précurseur alcalin.

A l'étape b), l'atmosphère est inerte, ce qui permet de limiter l'oxydation du Fe. Elle est de préférence formée d'au moins un gaz inerte, de préférence d'argon (Ar).

De préférence, la cuve de broyage est hermétique, hormis le cas échéant pour la circulation du gaz assurant le maintien d'une atmosphère inerte au sein de la cuve. De préférence, la durée du broyage réalisé à l'étape b) est comprise entre 5 et 25 minutes, par exemple égale à 10 minutes et la durée du repos est comprise entre 3 et 40 minutes, par exemple égale à 5 minutes.

De préférence, le cycle de synthèse est répété moins de 150 fois, par exemple 99 fois. Il peut être répété plus de 100 fois.

De préférence, la durée totale de l'étape b) est inférieure à 40 heures, par exemple égale à 25 heures.

De préférence, le broyage à l'étape b) est réalisé dans un broyeur à billes. De préférence, le rapport de la masse des billes sur la masse totale des précurseurs ferreux et alcalin est compris entre 5 et 30, notamment entre 5 et 20, par exemple égal à 10, la vitesse de rotation du broyeur étant en particulier comprise entre 450 rpm et 1000 rpm [rotations par minutes], par exemple égale à 750 rpm.

La personne du métier sait adapter la durée et la puissance du broyage ainsi que la durée du repos, et le nombre de cycles de synthèse de manière que le matériau d'électrode soit formé. Elle sait notamment assurer que la chaleur apportée par le broyage soit suffisante pour assurer le formation du matériau d'électrode. De préférence, la température de la cuve de broyage en fin d'étape b) est supérieure à 30 °C. Elle est par exemple comprise entre 50 °C et 250 °C. La personne du métier sait aussi éviter la formation d'autres phases cristallographiques non désirées, par exemple de type alluaudite. De préférence, la température de la cuve de broyage est inférieure ou égale à 350 °C, de préférence inférieure ou égale à 300 °C, de préférence inférieure ou égale à 250 °C durant toute la durée de l'étape b).

La température de la cuve de broyage est par exemple mesurée au moyen d'un thermocouple disposée dans la cuve de broyage, par exemple en contact avec la face intérieure de la paroi de la cuve de broyage.

L'invention va maintenant être illustrée au moyen des exemples et des planches de figures annexées dans lesquelles :
[Fig 1] représente un diffractogramme d'un exemple du matériau d'électrode selon l'invention,
[Fig 2] est un spectre Mössbauer de l'exemple du matériau d'électrode selon l'invention,
[Fig 3] sont des images acquises en microscopie à balayage à des grossissements différents de l'exemple du matériau selon l'invention,
[Fig 4] sont des courbes de décharge à différentes vitesses représentant l'évolution de la tension par rapport au couple Na⁺/Na en volts en fonction de la capacité en mAh/g d'un exemple d'électrode selon l'invention.

### Exemples

Les exemples non limitatifs suivants sont donnés dans le but d'illustrer l'invention. Dans les exemples, on a employé les matières premières suivantes :
précurseur alcalin : Na₂SO₄ de référence 238597-25G commercialisé par la société Sigma Aldrich.
précurseur ferreux : poudre de FeSO₄·7H₂O, présentant une pureté supérieure à 99 %, commercialisée par la société ReagentPlus^{®},

Dans tous les exemples selon l'invention, le précurseur ferreux a d'abord été déshydraté dans un four sous argon à une température de 250 °C pendant 3 heures jusqu'à obtention de FeSO₄·*x*H₂O avec x≈0.08.

### Exemple 1 :

Les précurseurs Na₂SO₄ et FeSO₄·*x*H₂O avec x≈0,08 ont été mélangés dans un mortier, avec un rapport du nombre de moles de Fe sur le nombre de moles de Na de 1,25, sous une atmosphère inerte. Le mélange a été placé dans un broyeur à billes en ZrO₂, hermétique et de référence Pulverisette Premium Line commercialisé par la société Fritsch^{®}. Le rapport de la masse des billes sur la masse du mélange des précurseurs était de 10. Un cycle de synthèse a consisté en un broyage de 10 minutes à une vitesse de 750 rpm [rotations par minutes] suivi par un repos d'une durée de 5 minutes. Ce cycle a été répété ensuite 99 fois. Un total de 100 cycles a donc été réalisé. Le broyat final, dénommé composé 1 a été extrait du broyeur.

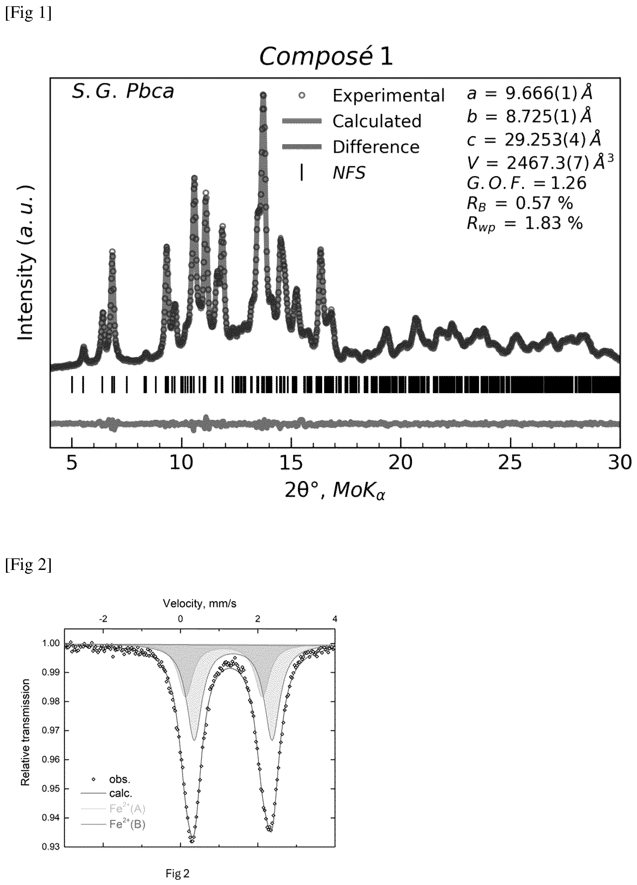

La figure 1 représente un diffractogramme de rayons X sur poudre du composé 1, affiné en utilisant la méthode de Rietveld. La structure du composé 1 est décrite dans le groupe d'espace *Pbca.* La mesure par diffraction aux rayons X a été réalisée avec un diffractomètre D8 Discover Bruker avec une source en molybdène (Kα₁=0.7093 Å, Kα₂=0.7135 Å). La mesure a été réalisée dans la configuration de type Debye-Scherrer et le composé 1 était scellé dans un capillaire sous atmosphère inerte de façon à éviter toute évolution possible.
La figure 2 représente un spectre Mössbauer du composé 1, qui contient uniquement le fer sous forme d'ions Fe²⁺ à un état haut spin, typique de l'ion Fe²⁺ dans les sulfates. La désommation du spectre permet de distinguer deux environnements locaux différents pour les ions Fe²⁺, le premier doublet avec un déplacement plus faible peut être attribué à un ion Fe²⁺ entouré par moins d'oxygène dans la structure que le second site Fe²⁺.

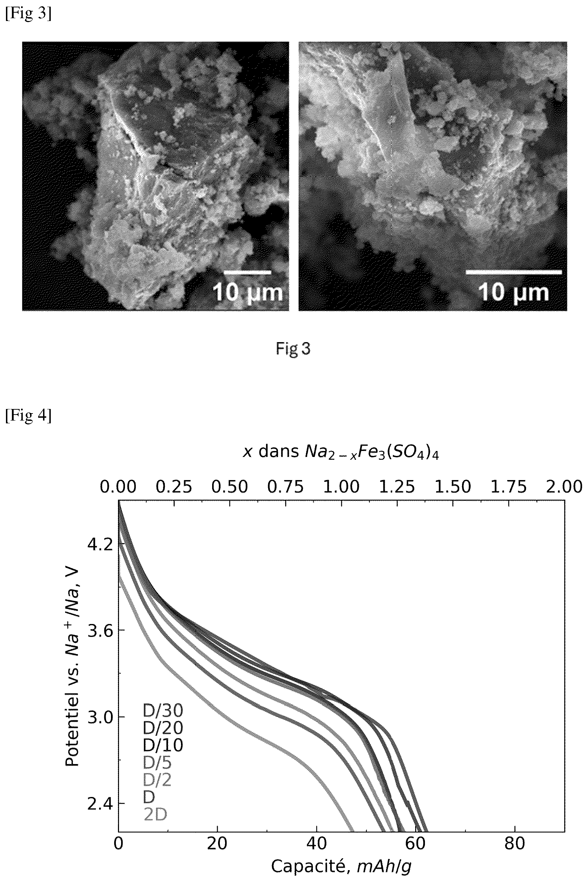

La figure 3 représente deux images du composé 1 obtenues par microscopie électronique à balayage. L'échantillon obtenu consiste en des agrégats qui sont composés de petites particules sans morphologie précise, typique d'un broyat.

### Exemple 2 :

Pour préparer une électrode, la poudre du composé 1 a été mélangée dans un mortier avec du noir de carbone et du polytetrafluoroéthylène (PTFE, de la marque Sigma-Aldrich à 99,9% de pureté) pour un total de 100% en masse réparti de la façon suivante : 75% du composé 1, 20% de noir de carbone et 5% de PTFE.

La capacité théorique pour le matériau d'électrode de formule Na₂Fe₃(SO₄)₄ de structure *Pbca* est de 90 mAh/g.

Des tests électrochimiques ont été réalisés en utilisant l'électrode formée comme électrode positive d'une pile de format CR2032, avec une électrode de référence en sodium, le tout ayant été assemblé sous atmosphère d'argon. Deux feuilles de fibres de verre trempé Viledon and Celgard^{®} ont été disposées entre les deux électrodes, pour faire office de séparateur et de réservoir d'électrolyte. L'électrolyte est composé de 1M NaPF₆ dissout dans un mélange de carbonate d'éthylène et de carbonate de diméthyl. Le rapport du volume de carbonate d'éthylène sur la masse de carbonate de diméthyl était égal à 1. En outre, l'électrolyte comportait, pour 2% de sa masse, du carbonate de fluoroéthylène. La pile comportant le composé 1 a été testée électrochimiquement à courant constant dans une succession de cycles formés chacun d'une charge suivie d'une décharge à une température de 25°C.

La figure 4 représente les courbes de décharge du composé 1 obtenues avec différentes densités de courant de D/30, D/20, D/10, D/5, D/2, D calculés en considérant l'échange de 2 électrons. A une densité de courant de D/30, l'électrode contenant le matériau d'électrode selon l'invention présente une capacité de 62 mAh/g avec une charge massique de matériau actif de 18 mg/cm**²**, soit 1,4 mAh/cm**²**. A une densité de courant de D l'électrode contenant le matériau d'électrode selon l'invention présente une capacité de 53 mAh/g avec une charge massique de matériau actif de 18 mg/cm**²**, soit 0,954 mAh/cm**²**. Cette valeur est plus de trois fois supérieure à celle obtenue pour les autres phases à base de Na, Fe et S comme par exemple Na₂Fe₂(SO₄)₃ qui délivre 80 mAh/g à D/5 avec une charge massique de matériau actif de 3 mg/cm**²** soit 0,24 mAh/cm**²**.

Comme cela est apparent à la lecture de la description, le matériau d'électrode selon l'invention présente des propriétés électrochimiques qui le rendent particulièrement bien adapté à une application pour électrode de batterie.

## Revendications

1. Matériau d'électrode de formule A₂Fe₃(SO₄)₄ dans laquelle A est un alcalin choisi parmi le sodium (Na), le lithium (Li), le potassium (K) et leurs mélanges, le matériau d'électrode présentant une structure cristallographique orthorhombique.

2. Matériau d'électrode selon la revendication 1, la structure orthorhombique du matériau d'électrode étant dans le groupe d'espace *Pbca.*

3. Matériau d'électrode selon l'une quelconque des revendications 1 et 2, l'alcalin A étant le sodium.

4. Procédé de fabrication comprenant :
a) la fourniture d'un précurseur alcalin comportant l'alcalin A et d'un précurseur ferreux comportant Fe, au moins l'un des précurseurs alcalin et ferreux comportant des groupes sulfates SO₄,
b) la répétition d'un cycle de synthèse jusqu'à formation du matériau d'électrode selon l'une quelconque des revendications précédentes, le cycle de synthèse étant mis en œuvre en atmosphère inerte et comportant, voire consistant en, un broyage des précurseurs alcalin et ferreux dans une cuve de broyage et un repos successif, voire consécutif, à l'arrêt du broyage.

5. Procédé selon la revendication précédente, le précurseur ferreux étant FeSO₄·xH₂O, avec 0 ≤ x < 0,5.

6. Procédé selon l'une quelconque des revendications 4 et 5, le précurseur alcalin étant de formule A₂SO₄, de préférence étant Na₂SO₄.

7. Procédé selon l'une quelconque des revendications 4 à 6, les précurseurs alcalin et ferreux étant fournis dans un rapport molaire Fe/A compris entre 1,2 et 1,5, de préférence égal à 1,25, le rapport molaire Fe/A étant égal au rapport du nombre de moles de Fe du précurseur ferreux sur le nombre de moles de A du précurseur alcalin.

8. Procédé selon l'une quelconque des revendications 4 à 7, la durée du broyage étant comprise entre 5 et 25 minutes, par exemple égale à 10 minutes et la durée du repos étant comprise entre 3 et 40 minutes, par exemple égale à 5 minutes.

9. Procédé selon l'une quelconque des revendications 4 à 8, le cycle étant répété moins de 150 fois, par exemple 99 fois.

10. Procédé selon l'une quelconque des revendications 4 à 9, la durée totale de l'étape b) étant inférieure à 40 heures, par exemple égale à 25 heures.

11. Procédé selon l'une quelconque des revendications 4 à 10, le broyage étant opéré dans un broyeur à billes, de préférence avec un rapport de la masse des billes sur la masse totale des précurseur ferreux et alcalin compris entre 5 et 30, par exemple égal à 10, la vitesse de rotation du broyeur étant en particulier comprise entre 450 rpm et 1000 rpm [rotations par minute], par exemple égale à 750 rpm.

12. Procédé selon l'une quelconque des revendications 4 à 11, l'atmosphère inerte étant formée d'au moins un gaz inerte, de préférence d'argon.

13. Electrode positive de batterie, notamment choisie parmi une électrode positive de batterie lithium-ion (Li-ion), une électrode positive de batterie sodium-ion (Na-ion), une électrode positive de batterie potassium-ion (K-ion), une électrode positive de batterie lithium (Li), une électrode positive de batterie sodium (Na) et une électrode positive de batterie potassium (K), ladite électrode positive de batterie comportant le matériau d'électrode selon l'une quelconque des revendications 1 à 3 ou obtenu par le procédé selon l'une quelconque des revendications 4 à 12.

14. Batterie, de préférence choisie parmi une batterie lithium-ion (Li-ion), une batterie sodium-ion (Na-ion), une batterie potassium-ion (K-ion), une batterie au sodium métal (Na), une batterie au lithium métal (Li), une batterie au potassium métal (K), la batterie comportant une électrode positive de batterie selon la revendication précédente.
